# EUROPEAN PATENT APPLICATION

(11) **EP 2 316 675 A1**
(43) Date of publication of application: **04.05.2011**
(21) Application number: 10188062.3
(22) Date of filing: 19.10.2010
(51) Int. Cl.: B60H 1/00

(54) **Air conditioner**

(30) Priority: 30.10.2009 JP 2009249635
(71) Applicant: Kabushiki Kaisha Toyota Jidoshokki, Kariya-shi, Aichi 448-8671 (JP)
(72) Inventor: Akiyama, Hirokuni, Kariya-shi Aichi 448-8671 (JP); Morisaku, Naoto, Kariya-shi Aichi 448-8671 (JP)
(74) Representative: TBK-Patent

(57) **Abstract**

An air conditioner includes a heat storage unit having a heat storage medium, a first heat exchanger for heat exchange with air in a compartment, a second heat exchanger for heat exchange with outside air, and a peltier unit having a first and second heat exchange surfaces opposite to each other. The first heat exchange surface is thermally conductive to the heat storage unit, and the second heat exchange surface is thermally conductive to the first and second heat exchangers. In heat storage mode electric current flows through the peltier unit in one direction to provide heat transfer between the second heat exchanger and the heat storage unit. In air conditioning mode electric current flows through the peltier unit in the other direction to provide heat transfer between the first heat exchanger and the heat storage unit.

## Description

### BACKGROUND OF THE INVENTION

The present invention relates to an air conditioner, and more particularly to an air conditioner using a heat storage medium.

Japanese Unexamined Patent Application Publication No. 62-153658 discloses a conventional air conditioner. In the air conditioner, two-stage compression using a single-stage compressor is performed with a time interval by using a heat storage, unit for latent heat storage in various operating conditions. Heat storage in the heat storage unit is performed using electric power during the nighttime. The stored heat is used as a heat source for air conditioning, resulting in a reduced air conditioning cost.

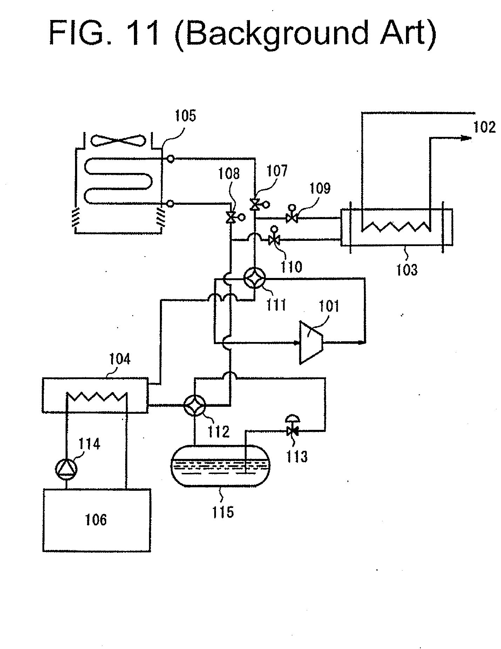

Fig. 11 is a schematic view of the conventional air conditioner. As shown in the drawings, the air conditioner includes a single-stage compressor 101, heat exchangers 103, 104, 105 serving as a condenser or evaporator, an expansion valve 113, and a reservoir 115. These components are connected through a piping to form a refrigerant circuit. The refrigerant circuit is provided with plural valves 107, 108, 108, 110, 111, 112 for changing flow path. The air conditioner further includes a heat storage unit 106 having a latent heat storage medium and a pump 114 which are connected to the heat exchanger 104 through the pipe. The pump 114 is operated so that fresh water (or brine) is circulated between the heat storage unit 106 and the heat exchanger 104. The heat exchanger 103 is for heat exchange with the water flowing through an air conditioning unit 102, and the heat exchanger 105 is for heat exchange with the outside air.

During the nighttime in the summer, the refrigerant compressed by the compressor 101 is evaporated in the heat exchanger 104 so as to cool the water circulating between the heat exchanger 104 and the heat storage unit 106. The cooled water serves to cool and solidify the heat storage medium of the heat storage unit 106. During the nighttime in the summer, cooling operation is not performed.

During the daytime in the summer, refrigerant flow path is changed for cooling operation. The refrigerant after heat exchange in the heat exchanger 103 as an evaporator is compressed by the compressor 101 and then transferred to the heat exchanger 104 as a condenser. In the heat exchanger 104, the refrigerant is condensed by heat exchange with the water circulating between the heat exchanger 104 and the heat storage unit 106 while releasing the latent heat of the heat storage medium. Then the refrigerant is evaporated in the heat exchanger 103, and the water flowing through the air conditioning unit 102 is cooled on the heat exchanger 103.

During the nighttime in the winter, refrigerant flow path is changed so that the heat exchanger 105 for heat exchange with the outside air serves as the evaporator and the heat exchanger 104 serves as the condenser. The refrigerant cooled by heat exchange with the outside air is compressed by the compressor 101 and then cooled by heat exchange with the water in the heat exchanger 104 as the condenser. The heated water after heat exchange is used for heat storage in the heat storage unit 106.

During the daytime in the winter, refrigerant flow path is changed for heating operation. The refrigerant compressed by the compressor 101 is transferred to the heat exchanger 103 as the condenser for heat exchange with the water flowing through the air conditioning unit 102. The refrigerant after heat exchange is evaporated in the heat exchanger 104 where heat is exchanged between the refrigerant and the water circulating through the heat exchanger 104 and the heat storage unit 106 so that heat is transferred from the water to the refrigerant.

In the above air conditioner, however, a vapor compression refrigeration cycle by a compressor is used, and therefore a refrigerant flow path needs to be switched depending on the change of operating conditions between the air conditioning and the heat storage or between the cooling and the heating, which may result in a complicated heat transfer path.

The present invention is directed to providing an air conditioner that allows a heat transfer path to be simplified regardless of operating conditions.

### SUMMARY OF THE INVENTION

In accordance with an aspect of the present invention, an air conditioner includes a heat storage unit having a heat storage medium, a first heat exchanger for heat exchange with air in a compartment, a second heat exchanger for heat exchange with outside air, and a peltier unit having a peltier device. The peltier unit has a first heat exchange surface and a second heat exchange surface opposite to each other. The first heat exchange surface is thermally conductive to the heat storage unit, and the second heat exchange surface is thermally conductive to the first and second heat exchangers. In heat storage mode electric current flows through the peltier unit in one direction to provide heat transfer between the second heat exchanger and the heat storage unit for heat storage in the heat storage medium. In air conditioning mode electric current flows through the peltier unit in the other direction to provide heat transfer between the first heat exchanger and the heat storage unit for air conditioning of the compartment.

In accordance with another aspect of the present invention, an air conditioner includes a heat storage unit having a heat storage medium, a heat exchanger for heat exchange with air in a compartment or outside air, and a peltier unit having a peltier device. The peltier unit has a first heat exchange surface and a second heat exchange surface opposite to each other. The first heat exchange surface is thermally conductive to the heat storage unit, and the second heat exchange surface is thermally conductive to the heat exchanger. In heat storage mode electric current flows through the peltier unit in one direction to provide heat transfer between the outside air and the heat storage unit through the heat exchanger for heat storage in the heat storage medium. In air conditioning mode electric current flows through the peltier unit in the other direction to provide heat transfer between the air in the compartment and the heat storage unit through the heat exchanger for air conditioning of the compartment.

Other aspects and advantages of the invention will become apparent from the following description, taken in conjunction with the accompanying drawings, illustrating by way of example the principles of the invention.

### BRIEF DESCRIPTION OF THE DRAWINGS

Fig. 1 is a schematic plan view of an electric vehicle equipped with an air conditioner according to a first embodiment of the present invention;
Fig. 2 is a schematic view of the air conditioner of Fig. 1;
Fig. 3 is a graph illustrating maximum COP of a peltier unit of the air conditioner;
Fig. 4A is a schematic view explaining the operation of the air conditioner and showing cold storage operation in high temperature environment;
Fig. 4B is similar to Fig. 4A, but showing cooling operation in high temperature environment;
Fig. 5A is similar to Fig. 4A, but showing heat storage operation in low temperature environment;
Fig. 5B is similar to Fig. 4A, but showing heating operation in low temperature environment;
Fig. 6A is similar to Fig. 4A, but showing cooling operation in medium temperature environment;
Fig. 6B is similar to Fig. 4A, but showing heating operation in medium temperature environment;
Figs. 7A and 7B are similar to Fig. 4A, but showing heating operation using waste heat;
Fig. 8 is a schematic view of an air conditioner as a modification of the first embodiment;
Fig. 9 is a schematic view of an air conditioner according to a second embodiment of the present invention;
Fig. 10 is a schematic view of an air conditioner according to a third embodiment of the present invention; and
Fig. 11 is a schematic view of a conventional air conditioner as a background art.

### DETAILED DESCRIPTION OF THE PREFERRED EMBODIMENTS

The following will describe the first embodiment of the air conditioner according to the present invention with reference to the accompanying drawings. In the embodiment, the air conditioner is intended to be used in an electric vehicle.

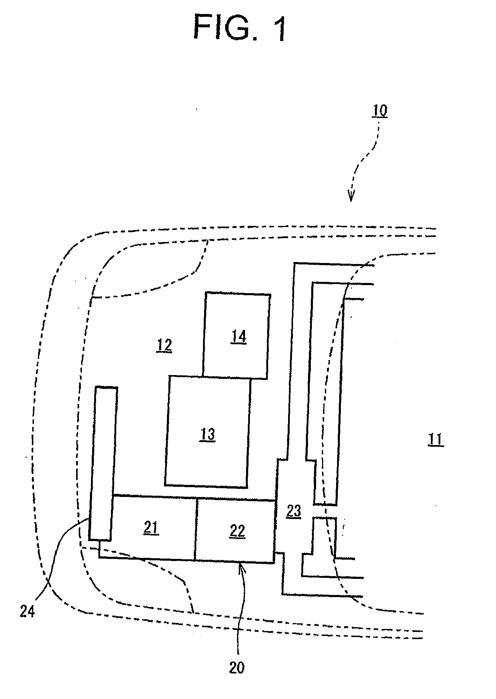

Referring to Fig. 1, an electric vehicle 10 has a compartment 11 at the middle thereof and a motor room 12 forward of the compartment 11. The motor room 12 is a space formed by part of the vehicle body such as frames and side members (neither being shown). The motor room 12 receives therein an electric motor 13 that is driven by electric power supplied by an in-vehicle battery (not shown). Torque generated by the electric motor 13 is transmitted through a drivetrain (not shown) to wheels (not shown) of the electric vehicle 10.

Electric power for driving the electric motor 13 is controlled by a power control unit 14 (hereinafter referred to as PCU) provided adjacent to the electric motor 13. The PCU 14 mainly includes an inverter (not shown) for converting direct current power from the battery into alternating current power, and a battery voltage booster (not shown). The PCU 14 is connected through electric cables (not shown) to the electric motor 13 and the battery. Heat generated in the components such as the electric motor 13, the PCU 14 and the drivetrain is usually referred to as waste heat of the system.

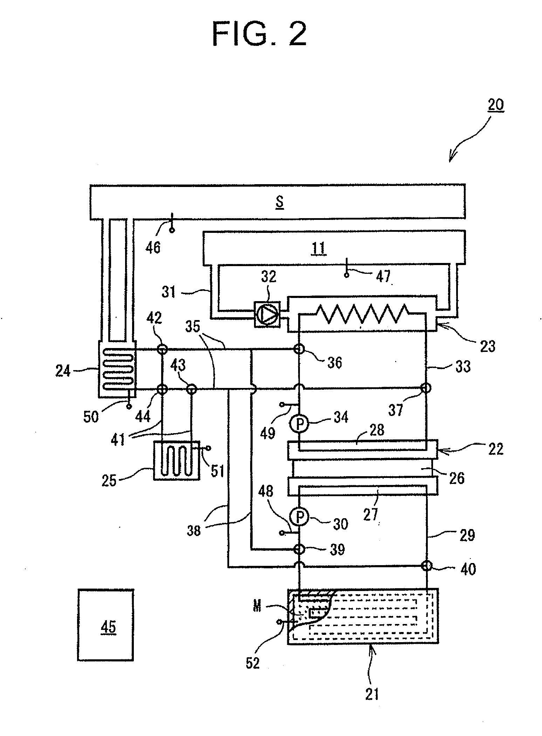

The air conditioner which is designated generally by numeral 20 is provided in the motor room 12. The air conditioner 20 includes a heat storage unit 21 having therein a heat storage medium M (see Fig. 2), a peltier unit 22 having a number of peltier devices, a first heat exchanger 23 for heat exchange with the air in the compartment 11, a second heat exchanger 24 for heat exchange with the outside air, and a third heat exchanger 25 (see Fig. 2) for heat exchange with waste heat. Although not shown in Fig. 1, these components of the air conditioner 20 are connected to each other through the circuits where heat medium is circulated. In the present embodiment, antifreeze fluid is used for the heat medium. Circulation of heat medium through such circuits and heat transfer by heat exchange in the respective components of the air conditioner 20 form thermal coupling between the components of the air conditioner 20.

Referring to Fig. 2, the heat storage unit 21 has a heat-insulated container filled with the heat storage medium M. The heat storage medium M is made of a latent heat storage material having a melting point within the range of 5 to 30 degrees Celsius. In the present embodiment, potassium fluoride tetrahydrate (KF·4H₂0) having a melting point of 18 degrees C is used for the heat storage medium M. The phase of the heat storage medium M is changed from liquid to solid when the temperature of the heat storage medium M is decreased below 18 degrees C, and from solid to liquid when the temperature of the heat storage medium M is increased over 18 degrees C.

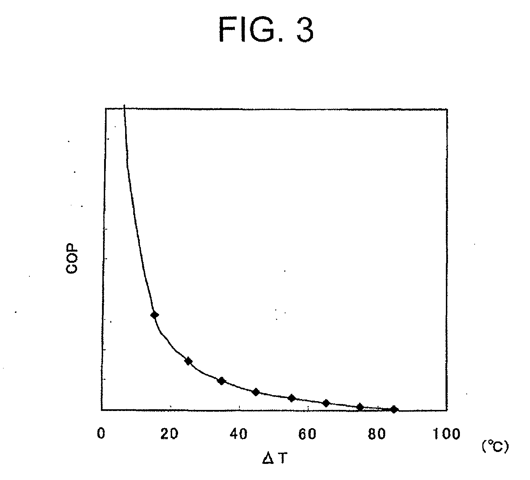

The peltier unit 22 includes a unit body 26 having a number of peltier devices, a first heat exchange surface 27 formed over one end surfaces of the peltier devices, a second heat exchange surface 28 formed over the other end surfaces of the peltier devices. When electric current flows through the peltier devices in one direction, the first heat exchange surface 27 serves as a heat absorbing surface and the second heat exchange surface 28 as a heat radiating surface. When electric current flows through the peltier devices in the other direction, the first heat exchange surface 27 serves as a heat radiating surface and the second heat exchange surface 28 as a heat absorbing surface. Fig. 3 is a graph illustrating maximum coefficient of performance (COP) of the peltier unit 22. The horizontal axis represents temperature difference (ΔT) between the first and second heat exchange surfaces 27, 28 of the peltier unit 22 when it is energized, and the vertical axis represents maximum COP.

As shown in Fig. 2, the air conditioner 20 includes a first heat medium circuit 29 where heat medium is circulated between the peltier unit 22 and the heat storage unit 21. Part of the first heat medium circuit 29 extends through the heat storage unit 21 to allow heat exchange between the heat medium flowing through the first heat medium circuit 29 and the heat storage medium M. Part of the first heat medium circuit 29 extends along the first heat exchange surface 27 of the peltier unit 22 to allow heat exchange between the heat medium flowing through the first heat medium circuit 29 and the first heat exchange surface 27. That is, the heat storage unit 21 is thermally coupled or thermally conductive to the first heat exchange surface 27 of the peltier unit 22 through the first heat medium circuit 29. The first heat medium circuit 29 is provided with a pump 30 for circulating heat medium in the first heat medium circuit 29 in one direction (first circulation condition).

The air conditioner 20 includes an air circulation passage 31 where air is circulated between the compartment 11 and the first heat exchanger 23. The air circulation passage 31 is provided with a fan 32 by which the air in the compartment 11 is circulated in the air circulation passage 31 in one direction. The first heat exchanger 23 has a space communicating with the compartment 11 through the air circulation passage 31 for heat exchange with the air in the compartment 11.

The air conditioner 20 includes a second heat medium circuit 33 where heat medium is circulated between the peltier unit 22 and the first heat exchanger 23. Part of the second heat medium circuit 33 extends through the first heat exchanger 23 to allow heat exchange between the heat medium flowing through the second heat medium circuit 33 and the air in the compartment 11. Part of the second heat medium circuit 33 extends also along the second heat exchange surface 28 of the peltier unit 22 to allow heat exchange between the heat medium flowing through the second heat medium circuit 33 and the second heat exchange surface 28. That is, the first heat exchanger 23 is thermally coupled to the second heat exchange surface 28 of the peltier unit 22 through the second heat medium circuit 33. The second heat medium circuit 33 is provided with a pump 34 for circulating heat medium in the second heat medium circuit 33 in one direction.

The air conditioner 20 includes a third heat medium circuit where heat medium is circulated between the second heat exchange surface 28 of the peltier unit 22 and the second heat exchanger 24. The second heat exchanger 24 communicates with the outside S of the vehicle 10, and the air in the outside S (or outside air) is introduced into the second heat exchanger 24. in the present embodiment, the third heat medium circuit is formed by a passage 35 connecting the second heat exchanger 24 to the second heat medium circuit 33 and part of the second heat medium circuit 33. The passage 35 is connected to the second heat medium circuit 33 through switching valves 36, 37. Depending on the positions of the switching valves 36, 37, heat medium is circulated between the first heat exchanger 23 and the second heat exchange surface 28 of the peltier unit 22, between the second heat exchanger 24 and the second heat exchange surface 28 through the third heat medium circuit, or between the second heat exchanger 24 and the first heat exchanger 23. That is, the second heat exchanger 24 is thermally coupled to the second heat exchange surface 28 of the peltier unit 22 through the third heat medium circuit.

Although not shown in the drawing, the second heat exchanger 24 is provided with a fan by which the outside air is introduced into the second heat exchanger 24 for heat exchange with heat medium. While the electric vehicle 10 is running, the second heat exchanger 24 can introduce the outside air without operating the fan.

The air conditioner 20 includes a fourth heat medium circuit where heat medium is circulated between the second heat exchanger 24 and the first heat exchange surface 27 of the peltier unit 22. in the present embodiment, the fourth heat medium circuit is formed by a passage 38 connecting the second heat exchanger 24 to the first heat medium circuit 29 and part of the first heat medium circuit 29. The passage 38 is connected to the first heat medium circuit it 29 through switching valves 39, 40. Depending on the positions of the switching valves 39, 40, heat medium is circulated between the heat storage unit 21 and the second heat exchange surface 27 of the peltier unit 22, between the second heat exchanger 24 and the first heat exchange surface 27 through the fourth heat medium circuit (second circulation condition), or between the second heat exchanger 24 and the heat storage unit 21. The switching valves 36, 37, 39, 40 correspond to the switching device of the present invention for switching between the heat medium circuits and for switching the operation of the air conditioner 20 between the first circulation condition and the second circulation condition.

The air conditioner 20 includes a fifth heat medium circuit where heat medium is circulated between the third heat exchanger 25 and the first heat exchange surface 27 of the peltier unit 22. The third heat exchanger 25 is provided for heat exchange with the system waste heat through heat medium. In the present embodiment, the fifth heat medium circuit is formed by a passage 41 connecting the third heat exchanger 25 to the passage 35, part of the first heat medium circuit 29, part or whole of the passage 35, and the passage 38. The passage 41 is connected to the passage 35 through switching valves 42, 43, 44. Depending on the positions of the switching valves 42, 43, 44, heat medium is flowed through either the second heat exchanger 24 or the third heat exchanger. 25, through both the second and third heat exchangers 24, 25, or between the second and third heat exchangers 24, 25. The fifth heat medium circuit is equipped with a reversibly operable pump (not shown) for circulating heat medium in the fifth heat medium circuit (third circulation condition). The switching valves 36, 37, 39, 40, 42, 43, 44 correspond to the switching device of the present invention for switching between the heat medium circuits and for switching the operation of the air conditioner 20 between the first circulation condition and the third circulation condition.

The air conditioner 20 includes a controller 45. The controller 45 is used to set a target temperature of the compartment 11 or target compartment temperature (target heating temperature and target cooling temperature). The controller 45 controls the operation of the pumps 30, 34, the fan 32, and the switching valves 36, 37, 39, 40, 42, 43, 44, and also the energization of the peltier unit 22. The controller 45 is connected to temperature sensors 46, 47, 48, 49, 50, 51, 52 provided at various positions in the air conditioner 20. The controller 45 controls the operation of various components of the air conditioner 20 based on the signals from the temperature sensors 46 through 52.

The temperature sensor 46 is for detecting the temperature of the air in the outside S, and the temperature sensor 47 is for detecting the temperature of the air in the compartment 11. The temperature sensor 48 is for detecting the temperature of the heat medium flowing through the first heat medium circuit 29, and the temperature sensor 49 is for detecting the temperature of the heat medium flowing through the second heat medium circuit 33. The temperature sensor 50 is for detecting the temperature of the heat medium flowing through the second heat exchanger 24, the temperature sensor 51 is for detecting the temperature of the heat medium flowing through the third heat exchanger 25, and the temperature sensor 52 is for detecting the temperature of the heat storage medium M. The temperature sensor 52 serves as the first temperature sensor of the present invention, the temperature sensor 50 serves as the second temperature sensor of the present invention, the temperature sensor 51 serves as the fourth temperature sensor of the present invention, and the temperature sensors 46, 47 serve as the third temperature sensor of the present invention.

The controller 45 serves to compare the difference between the temperature detected by the temperature sensor 52 and the target compartment temperature (first temperature difference) with the difference between the temperature detected by the temperature sensor 50 and the target compartment temperature (second temperature difference). The controller 45 also serves to determine whether or not the temperature of the air in the compartment 11 detected by the temperature sensor 47 or the temperature of the air in the outside S detected by the temperature sensor 46 is within a predetermined range.

The following will describe various operating modes of the air conditioner 20. The air conditioner 20 is operated under at least either one of the air conditioning mode in which air conditioning (cooling or heating) of the compartment 11 is performed and the heat storage mode in which heat or cold storage in the heat storage medium M is performed. The air conditioning mode means, for example, a state in which the traveling system of the electric vehicle 10 is turned on, and the heat storage mode means a state in which the electric vehicle 10 is at a stop and the in-vehicle battery is being charged or has been charged.

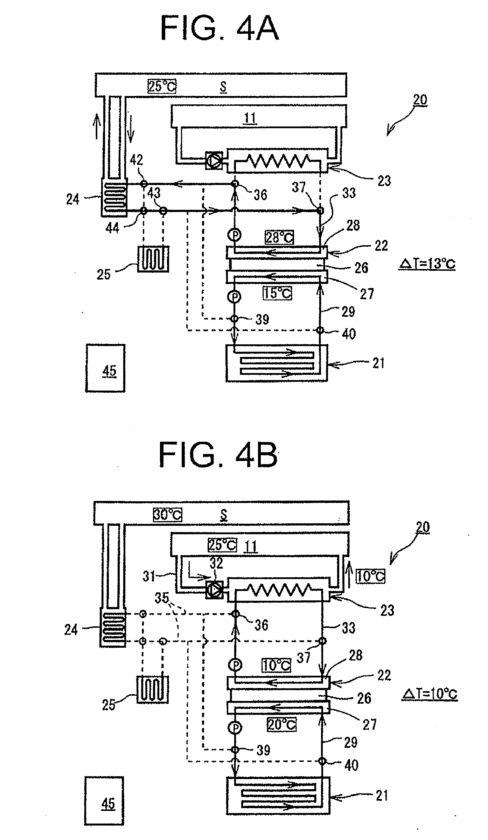

Fig. 4A is a schematic view explaining the operation of the air conditioner 20 and showing the cold storage operation in high temperature environment such as in summer. As shown in the drawing, for example, the air conditioner 20 is operated in the heat storage mode so that the cold storage in the heat storage unit 21 is performed during the nighttime. This cold storage operation is performed when the electric vehicle 10 is at a stop and electric power can be supplied from an external power source, for example, when the battery in the vehicle is being charged. In this case, the temperature of the air in the outside S (outside air) is, for example, 25 degrees C. The temperature of the heat storage medium M in the heat storage unit 21 before the cold storage is higher than 18 degrees C, and the heat storage medium M is in liquid state.

In such cold storage operation, the switching valves 39, 40 and the pump 30 are operated under the control of the controller 45 so that heat medium is circulated in one direction through the first heat medium circuit 29 between the heat storage unit 21 and the first heat exchange surface 27 of the peltier unit 22. The switching valves 36, 37 and the pump 34 are also operated under the control of the controller 45 so that heat medium is circulated through the third heat medium circuit between the second heat exchanger 24 and the second heat exchange surface 28 of the peltier unit 22. In this case, the operation of the switching valves 42, 43, 44 is controlled by the controller 45 so as to prevent heat medium from flowing through the third heat exchanger 25. it is noted that in Fig. 4A the arrowed solid line indicates the flow path in which heat medium is circulated and the dotted line indicates the flow path in which no heat medium is circulated.

The fan (not shown) of the second heat exchanger 24 is operated under the control of the controller 45 so that the outside air is introduced into the second heat exchanger 24. The peltier unit 22 is energized in one direction under the control of the controller 45 using electric power supplied from an external power source, so that the first heat exchange surface 27 of the peltier unit 22 serves as the heat absorbing surface and the second heat exchange surface 28 serves as the heat radiating surface, thus allowing heat transfer from the first heat exchange surface 27 to the second heat exchange surface 28.

Heat medium flowing through the first heat medium circuit 29 is cooled by heat exchange with the first heat exchange surface 27 of the peltier unit 22. For example, when the heat medium temperature before being cooled is 18 degrees C, the heat medium is cooled to 12 degrees C by the first heat exchange surface 27, and the temperature of the first heat exchange surface 27 (T1 is 15 degrees C on average. Heat is removed from the heat storage medium M to the heat medium by heat exchange between the cooled heat medium and the heat storage medium M in the heat storage unit 21, so that the temperature of the heat storage medium M is decreased. The amount of heat removed from the heat storage medium M is increased by repeated circulation of the heat medium through the first heat medium circuit 29 between the first heat exchange surface 27 and the heat storage unit 21, and the phase of the heat storage medium M is changed from liquid to solid when the heat storage medium M is cooled below 18 degrees C.

On the other hand, heat medium flowing through the third heat medium circuit is heated by heat exchange with the second heat exchange surface 28 of the peltier unit 22. For example, when the heat medium temperature before being heated is 25 degrees C, the heat medium is heated to 31 degrees C by the second heat exchange surface 28, and the temperature of the second heat exchange surface 28 (T2) is 28 degrees C on average. Heat is transferred from the heat medium to the outside air by heat exchange between the heated heat medium and the outside air in the second heat exchanger 24, so that the temperature of the heat medium is decreased. The heat that the heat medium receives from the second heat exchange surface 28 is discharged into the outside S by repeated circulation of the heat medium through the third heat medium circuit between the second heat exchange surface 28 and the second heat exchanger 24.

In this way, when the peltier unit 22 is energized in one direction, heat is transferred from the heat storage medium M to the outside S between the second heat exchanger 24 and the heat storage unit 21, resulting in cold storage in the heat storage unit 21. In the cold storage operation, the temperature difference (ΔT) between the first and second heat exchange surfaces 27, 28 of the peltier unit 22 is 13 degrees C. The temperature of the heat medium flowing through the first heat medium circuit 29 is constantly monitored by the temperature sensor 48. When it is determined by the controller 45 that the temperature detected by the temperature sensor 48 indicates a sufficient cold storage in the heat storage medium M and the cold storage operation is completed, the pumps 30, 34 are stopped and the peltier unit 22 is de-energized.

Fig. 4B is similar to Fig. 4A, but showing the cooling operation in high temperature environment such as in summer. As shown in the drawing, for example, the air conditioner 20 is operated in the air conditioning mode so that cooling operation for the compartment 11 is performed during the daytime using the heat storage unit 21. This cooling operation is performed using electric power charged in the battery and cold storage in the heat storage unit 21 while the electric vehicle 10 is running. For example, the temperature of the outside air is 30 degrees C. The temperature of the heat storage medium M in the heat storage unit 21 before the cooling operation is lower than 18 degrees C, and the heat storage medium M is in solid state.

In such cooling operation, the switching valves 39, 40 and the pump 30 are operated under the control of the controller 45 so that heat medium is circulated in one direction through the first heat medium circuit 29 between the heat storage unit 21 and the first heat exchange surface 27 of the peltier unit 22. The switching valves 36, 37 and the pump 34 are also operated under the control of the controller 45 so that heat medium is circulated through the second heat medium circuit 33 between the first heat exchanger 23 and the second heat exchange surface 28 of the peltier unit 22.

The fan 32 is operated under the control of the controller 45 so that air is circulated between the compartment 11 and the first heat exchanger 23. The peltier unit 22 is energized in the other direction under the control of the controller 45 using electric power charged in the battery, so that the first heat exchange surface 27 of the peltier unit 22 serves as the heat radiating surface and the second heat exchange surface 28 as the heat absorbing surface, thus allowing heat transfer from the second heat exchange surface 28 to the first heat exchange surface 27.

Heat medium flowing through the second heat medium circuit 33 is cooled by heat exchange with the second heat exchange surface 28 of the peltier unit 22. For example, when the heat medium temperature before being cooled is 13 degrees C, the heat medium is cooled to 7 degrees C by the second heat exchange surface 28, and the temperature of the second heat exchange surface 28 is 10 degrees C on average. The heat exchange between the cooled heat medium and the air in the first heat exchanger 23 provides heat transfer from the air to the heat medium, so that the temperature of the heat medium is increased. Then the air of 10 degrees C is blown through the air circulation passage 31 into the compartment 11, so that the compartment 11 is cooled. Heat of the air in the compartment 11 is transferred to the heat medium by repeated circulation of the heat medium through the second heat medium circuit 33 between the second heat exchange surface 28 and the first heat exchanger 23. The heat transferred to the heat medium is transferred to the second heat exchange surface 28 and further to the first heat exchange surface 27.

On the other hand, heat medium flowing through the first heat medium circuit 29 is heated by heat exchange with the first heat exchange surface 27 of the peltier unit 22. For example, when the heat medium temperature before being heated is 17 degrees C, the heat medium is heated to 23 degrees C, and the temperature of the first heat exchange surface 27 is 20 degrees C on average. The heat exchange between the heated heat medium and the heat storage medium M in the heat storage unit 21 provides heat transfer from the heat medium to the heat storage medium M, so that the temperature of the heat storage medium M is increased. The heat is transferred from the heat medium to the heat storage medium M by repeated circulation of the heat medium through the first heat medium circuit 29 between the first heat exchange surface 27 and the heat storage unit 21. When the heat storage medium M is heated above 18 degrees C, the phase of the heat storage medium M is changed from solid to liquid. That is, the stored cold in the heat storage medium M is exhausted because of heat transfer from the heat medium to the heat storage medium M. The cooling operation using the heat storage unit 21 can be performed while heat transfer from the heat medium to the heat storage unit 21 is allowed.

In this way, when the peltier unit 22 is energized in the other direction, heat is transferred from the air in the compartment 11 to the heat storage medium M between the first heat exchanger 23 and the heat storage unit 21, so that the compartment 11 is cooled. In the cooling operation, the temperature difference (ΔT) between the first and second heat exchange surfaces 27, 28 of the peltier unit 22 is 10 degrees C, which results in a higher COP, as shown in Fig. 3. The temperature of the heat medium flowing through the first heat medium circuit 29 is constantly monitored by the temperature sensor 48, and the temperature of the heat medium flowing through the second heat medium circuit 33 is constantly monitored by the temperature sensor 49.

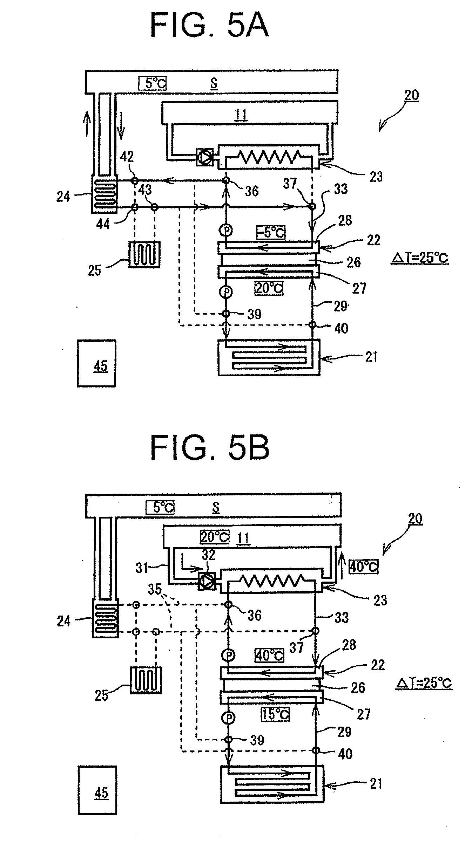

Fig. 5A is similar to Fig. 4A, but showing the heat storage operation in low temperature environment such as in winter. As shown in the drawing, for example, the air conditioner 20 is operated in the heat storage mode so that the heat storage in the heat storage unit 21 is performed during the nighttime. This heat storage operation is performed when the electric vehicle 90 is at a stop and electric power can be supplied from an external power source, for example, when the battery in the vehicle is being charged. In this case, the temperature of the outside air is, for example, 5 degrees C. The temperature of the heat storage medium M in the heat storage unit 21 before the heat storage is lower than 18 degrees C, and the heat storage medium M is in solid state.

In such heat storage operation, as in the cold storage operation, the switching valves 39, 40 and the pump 30 are operated by the controller 45 so that heat medium is circulated in one direction through the first heat medium circuit 29 between the heat storage unit 21 and the first heat exchange surface 27 of the peltier unit 22. The switching valves 36, 37 and the pump 34 are also operated by the controller 45 so that heat medium is circulated through the third heat medium circuit between the second heat exchanger 24 and the second heat exchange surface 28 of the peltier unit 22. In this case, the operation of the switching valves 42, 43, 44 is controlled by the controller 45 so as to prevent heat medium from flowing through the third heat exchanger 25.

The fan (not shown) of the second heat exchanger 24 is operated by the controller 45 so that the outside air is introduced into the second heat exchanger 24. The peltier unit 22 is energized in the other direction under the control of the controller 45 using electric power supplied from an external power source, so that the first heat exchange surface 27 of the peltier unit 22 serves as the heat radiating surface and the second heat exchange surface 28 serves as the heat absorbing surface, thus allowing heat transfer from the second heat exchange surface 28 to the first heat exchange surface 27.

Heat medium flowing through the third heat medium circuit is cooled by heat exchange with the second heat exchange surface 28 of the peltier unit 22. For example, when the heat medium temperature before being cooled is minus 2 degrees C, the heat medium is cooled to minus 8 degrees C by the second heat exchange surface 28, and the temperature of the second heat exchange surface 28 (T2) is minus 5 degrees C on average. Heat is removed from the outside air to the heat medium by heat exchange between the cooled heat medium and the outside air in the second heat exchanger 24, so that the temperature of the heat medium is increased. The heat that the heat medium receives from the outside air in the second heat exchanger 24 is transferred to the peltier unit 22 by repeated circulation of the heat medium through the third heat medium circuit between the second heat exchange surface 28 and the second heat exchanger 24.

On the other hand, heat medium flowing through the first heat medium circuit 29 is heated by heat exchange with the first heat exchange surface 27 of the peltier unit 22. For example, when the heat medium temperature before being heated is 17 degrees C, the heat medium is heated to 23 degrees C by the first heat exchange surface 27, and the temperature of the first heat exchange surface 27 (T1) is 20 degrees C on average. Heat is transferred from the heat medium to heat storage medium M by heat exchange between the heated heat medium and the heat storage medium M in the heat storage unit 21, so that the temperature of the heat storage medium M is increased and the temperature of the heat medium is decreased. The amount of heat that the heat storage medium M receives from the heat medium is increased by repeated circulation of the heat medium through the first heat medium circuit 29 between the first heat exchange surface 27 and the heat storage unit 21, and the phase of the heat storage medium M is changed from solid to liquid when the heat storage medium M is heated over 18 degrees C.

In this way, when the peltier unit 22 is energized in the other direction, heat is transferred from the outside air to the heat storage unit 21 between the second heat exchanger 24 and the heat storage unit 21, resulting in heat storage in the heat storage unit 21. In the heat storage operation, the temperature difference (ΔT) between the first and second heat exchange surfaces 27, 28 of the peltier unit 22 is 25 degrees C. The temperature of the heat medium flowing through the first heat medium circuit 29 is constantly monitored by the temperature sensor 48.

Fig. 5B is similar to Fig. 4A, but showing the heating operation in low temperature environment such as in winter. As shown in the drawing, for example, the air conditioner 20 is operated in the air conditioning mode so that heating operation for the compartment 11 is performed during the daytime using the heat storage unit 21. This heating operation is performed using electric power charged in the battery and heat storage in the heat storage unit 21 while the electric vehicle 10 is running: For example, the temperature of the outside air is 5 degrees C. The temperature of the heat storage medium M in the heat storage unit 21 before the heating operation is higher than 18 degrees C, and the heat storage medium M is in liquid state.

In such heating operation, as in the cooling operation, the switching valves 39, 40 and the pump 30 are operated by the controller 45 so that heat medium is circulated in one direction through the first heat medium circuit 29 between the heat storage unit 21 and the first heat exchange surface 27 of the peltier unit 22. The switching valves 36, 37 and the pump 34 are also operated by the controller 45 so that heat medium is circulated through the second heat medium circuit 33 between the first heat exchanger 23 and the second heat exchange surface 28 of the peltier unit 22.

The fan 32 is operated by the controller 45 so that air is circulated between the compartment 11 and the first heat exchanger 23. The peltier unit 22 is energized in one direction under the control of the controller 45 using electric power charged in the battery, so that the first heat exchange surface 27 of the peltier unit 22 serves as the heat absorbing surface and the second heat exchange surface 28 as the heat radiating surface, thus allowing heat transfer from the first heat exchange surface 27 to the second heat exchange surface 28.

Heat medium flowing through the first heat medium circuit 29 is cooled by heat exchange with the first heat exchange surface 27 of the peltier unit 22. For example, when the heat medium temperature before being cooled is 18 degrees C, the heat medium is cooled to 12 degrees C by the first heat exchange surface 27, and the temperature of the first heat exchange surface 27 (T1) is 15 degrees C on average. The heat exchange between the cooled heat medium and the heat storage medium M in the heat storage unit 21 provides heat transfer from the heat storage medium M to the heat medium, so that the temperature of the heat storage medium M is decreased. The amount of heat removed from the heat storage medium M is increased by repeated circulation of the heat medium through the first heat medium circuit 29 between the first heat exchange surface 27 and the heat storage unit 21, and the phase of the heat storage medium M is changed from liquid to solid when the heat storage medium M is cooled below 18 degrees C. That is, the stored heat in the heat storage medium M is exhausted because of heat transfer from the heat storage medium M to the heat medium. The heating operation using the heat storage unit 21 can be performed while heat transfer from the heat storage medium M to the heat medium is allowed.

On the other hand, heat medium flowing through the second heat medium circuit 33 is heated by heat exchange with the second heat exchange surface 28 of the peltier unit 22. For example, when the heat medium temperature before being heated is 37 degrees C, the heat medium is heated to 43 degrees C, and the temperature of the second heat exchange surface 28 (T2) is 40 degrees C on average. The heat exchange between the heated heat medium and the air in the compartment 11 in the first heat exchanger 23 provides heat transfer from the heat medium to the air in the compartment 11, so that the temperature of the heat medium is decreased. The heat that the heat medium receives from the second heat exchange surface 28 is transferred to the air in the compartment 11 by repeated circulation of the heat medium through the second heat medium circuit 33 between the second heat exchange surface 28 and the first heat exchanger 23.

In this way, when the peltier unit 22 is energized in one direction, heat is transferred from the heat storage medium M to the air in the compartment 11 between the first heat exchanger 23 and the heat storage unit 21, so that the compartment 11 is heated. In the heating operation, the temperature difference (ΔT) between the first and second heat exchange surfaces 27, 28 of the peltier unit 22 is 25 degrees C. The temperature of the heat medium flowing through the first heat medium circuit 29 is constantly monitored by the temperature sensor 48.

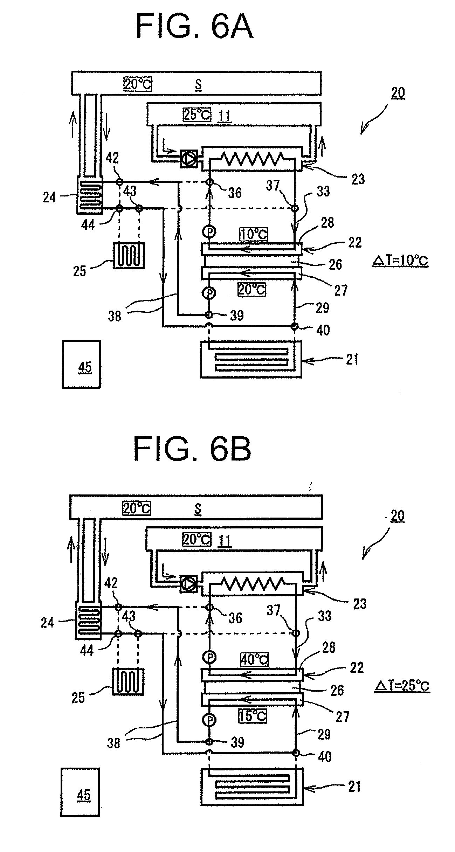

Fig. 6A is similar to Fig. 4A, but showing the cooling operation in medium temperature environment such as in spring and autumn. In the present embodiment, the medium temperature environment means an environment in which temperature range is higher than that in winter but lower than that in summer as in spring and autumn. Although in the present embodiment the temperature range in the medium temperature environment is set from 10 to 30 degrees C, it may be, for example, from 15 to 25 degrees C. Alternatively, for example, the melting point of the heat storage medium M plus or minus 10 degrees C may be set as the temperature range for the medium temperature environment (hereinafter referred to as medium temperature range).

In the cooling operation in the medium temperature environment, when it is determined by the controller 45 that the outside air temperature detected by the temperature sensor 46 is within the medium temperature range, the cooling operation is performed by heat transfer between the first and second heat exchangers 23, 24, without using the heat storage unit 21. In this case, the temperature detected by the temperature sensor 50 may be regarded as the outside air temperature. Alternatively, the cooling operation may be performed when the temperature of the compartment 11 (compartment temperature) detected by the temperature sensor 47, instead of the outside air temperature detected by the temperature sensor 46, is within the medium temperature range. Further alternatively, when the outside air temperature or the temperature of the compartment 11 is within the medium temperature range, the cooling operation may be performed selectively by manual operation of any switch by a driver or passenger of the vehicle.

As shown in Fig. 6A, the air conditioner 20 is operated in the air conditioning mode so that cooling operation for the compartment 11 is performed during the daytime without using the heat storage unit 21. This cooling operation is performed using electric power charged in the battery while the electric vehicle 10 is running. For example, the temperature of the outside air is 20 degrees C.

In such cooling operation, the switching valves 39, 40 and the pump 30 are operated by the controller 45 so that heat medium is circulated in one direction through the passages 35, 38 and part of the first heat medium circuit 29 between the second heat exchanger 24 and the first heat exchange surface 27 of the peltier unit 22. The switching valves 36, 37 and.the pump 34 are also operated by the controller 45 so that heat medium is circulated through the second heat medium circuit 33 between the first heat exchanger 23 and the second heat exchange surface 28 of the peltier unit 22.

The fan 32 is operated by the controller 45 so that air is circulated between the compartment 11 and the first heat exchanger 23. The peltier unit 22 is energized in the other direction under the control of the controller 45 using electric power charged in the battery, so that the first heat exchange surface 27 of the peltier unit 22 serves as the heat radiating surface and the second heat exchange surface 28 as the heat absorbing surface, thus allowing heat transfer from the second heat exchange surface 28 to the first heat exchange surface 27.

Heat medium flowing through the second heat medium circuit 33 is cooled by heat exchange with the second heat exchange surface 28 of the peltier unit 22. For example, when the heat medium temperature before being cooled is 13 degrees C, the heat medium is cooled to 7 degrees C by the second heat exchange surface 28, and the temperature of the second heat exchange surface 28 is 10 degrees C on average. The air after heat exchange in the first heat exchanger 23 is blown through the air circulation passage 31 into the compartment 11, so that the compartment 11 is cooled. Heat of the air in the compartment 11 is transferred to the heat medium. The heat transferred to the heat medium is transferred to the second heat exchange surface 28 and further to the first heat exchange surface 27.

On the other hand, heat medium flowing through the fourth heat medium circuit is heated by heat exchange with the first heat exchange surface 27 of the peltier unit 22. For example, when the heat medium temperature before being heated is 17 degrees C, the heat medium is heated to 23 degrees C, and the temperature of the first heat exchange surface 27 is 20 degrees C on average. The heat exchange between the heated heat medium and the outside air in the second heat exchanger 24 provides heat transfer from the heat medium to the outside air, so that the temperature of the heat medium is decreased. The heat that the heat medium receives from the first heat exchange surface 27 is discharged into the outside S by circulation of the heat medium through the fourth heat medium circuit between the first heat exchange surface 27 and the second heat exchanger 24.

In this way, when the peltier unit 22 is energized in the other direction, heat is transferred from the air in the compartment 11 to the outside air between the first and second heat exchangers 23, 24, so that the compartment 11 is cooled. In the cooling operation, the temperature difference (ΔT) between the first and second heat exchange surfaces 27, 28 of the peltier unit 22 is 10 degrees C, which results in a higher COP, as shown in Fig. 3. The temperature of the heat medium flowing through the second heat medium circuit 33 is constantly monitored by the temperature sensor 49. The temperature of the heat medium flowing between the second heat exchanger 24 and the peltier unit 22 is constantly monitored by the temperature sensors 48, 50.

Fig. 6B is similar to Fig. 4A, but showing the heating operation in medium temperature environment such as in spring and autumn. In the heating operation in the medium temperature environment, when it is determined by the controller 45 that the outside air temperature detected by the temperature sensor 46 is within the medium temperature range, the heating operation is performed by heat transfer between the first and second heat exchangers 23, 24, without using the heat storage unit 21. In this case, the temperature detected by the temperature sensor 50 may be regarded as the outside air temperature. Alternatively, the heating operation may be performed when the temperature of the compartment 11 detected by the temperature sensor 47, instead of the outside air temperature detected by the temperature sensor 46, is within the medium temperature range. Further alternatively, when the outside air temperature or the temperature of the compartment 11 is within the medium temperature range, the heating operation may be performed selectively by manual operation of any switch by a driver or passenger of the vehicle.

As shown in Fig. 6B, the air conditioner 20 is operated in the air conditioning mode so that heating operation for the compartment 11 is performed during the daytime without using the heat storage unit 21. This heating operation is performed using electric power charged in the battery while the electric vehicle 10 is running. For example, the temperature of the outside air is 20 degrees C.

In such heating operation, the switching valves 39, 40 and the pump 30 are operated by the controller 45 so that heat medium is circulated through the passages 35, 38 and part of the first heat medium circuit 29. The switching valves 36, 37 and the pump 34 are also operated by the controller 45 so that heat medium is circulated through the second heat medium circuit 33.

The fan 32 is operated by the controller 45 so that air is circulated between the compartment 11 and the first heat exchanger 23. The peltier unit 22 is energized in one direction under the control of the controller 45 using electric power charged in the battery, so that the first heat exchange surface 27 of the peltier unit 22 serves as the heat absorbing surface and the second heat exchange surface 28 as the heat radiating surface, thus allowing heat transfer from the first heat exchange surface 27 to the second heat exchange surface 28.

Heat medium flowing through the fourth heat medium circuit is cooled by heat exchange with the first heat exchange surface 27 of the peltier unit 22. For example, when the heat medium temperature before being cooled is 18 degrees C, the heat medium is cooled to 12 degrees C by the first heat exchange surface 27, and the temperature of the first heat exchange surface 27 is 15 degrees C on average. The heat exchange between the cooled heat medium and the outside air in the second heat exchanger 24 provides heat transfer from the outside air to the heat medium, so that the temperature of the heat medium is increased. The heat transferred to the heat medium is transferred to the first heat exchange surface 27 and further to the second heat exchange surface 28.

On the other hand, heat medium flowing through the second heat medium circuit 33 is heated by heat exchange with the second heat exchange surface 28 of the peltier unit 22. For example, when the heat medium temperature before being heated is 37 degrees C, the heat medium is heated to 43 degrees C, and the temperature of the second heat exchange surface 28 is 40 degrees C on average. The heat exchange between the heated heat medium and the air in the compartment 11 in the first heat exchanger 23 provides heat transfer from the heat medium to the air in the compartment 11, so that the temperature of the heat medium is decreased. The heat that the heat medium receives from the second heat exchange surface 28 is transferred to the air in the compartment 11 by repeated circulation of the heat medium through the second heat medium circuit 33 between the second heat exchange surface 28 and the first heat exchanger 23. The air after heat exchange in the first heat exchanger 23 is blown through the air circulation passage 31 into the compartment 11, so that the compartment 11 is heated.

In this way, when the peltier unit 22 is energized in one direction, heat is transferred from the outside air to the air in the compartment 11 between the first and second heat exchangers 23, 24, so that the compartment 11 is heated. In the heating operation, the temperature difference (ΔT) between the first and second heat exchange surfaces 27, 28 of the peltier unit 22 is 10 degrees C. The temperature of the heat medium flowing through the second heat medium circuit 33 is constantly monitored by the temperature sensor 49. The temperature of the heat medium flowing between the second heat exchanger 24 and the peltier unit 22 is constantly monitored by the temperature sensors 48, 50.

Although in the above-described embodiment the cooling operation is performed without using the heat storage unit 21 in the medium temperature environment, the cooling operation of the air conditioner 20 may be switched by the controller 45 between the cooling using the heat storage unit 21 and the cooling without using the heat storage unit 21. For example, firstly, the cooling operation using the heat storage unit 21 is performed, and then switched to the cooling operation without using the heat storage unit 21 when cooling capacity of the heat storage unit 21 is gone.

Specifically, when the temperature detected by the temperature sensor 52 indicates that the stored cold in the heat storage unit 21 is exhausted due to the continuing cooling operation using the heat storage unit 21 (see Fig. 4B) and no heat transfer to the heat storage medium M occurs, the cooling operation using the heat storage unit 21 is switched by the controller 45 to the cooling operation without using the heat storage unit 21 (see Fig. 6A). In this case, the temperature detected by the temperature sensor 52 and indicating that no heat transfer to the heat storage medium M occurs corresponds to the temperature threshold for switching the cooling operation. For example, the melting point of the heat storage medium M plus or minus 10 degrees C may be used for such temperature threshold, whereby it may be determined that the stored cold in the heat storage medium M by phase change is exhausted.

Alternatively, the cooling operation may be switched based on the temperature in the second heat exchanger 24. In this case, the controller 45 determines the difference between the temperature of the heat storage medium M detected by the temperature sensor 52 and the target cooling temperature (first temperature difference) and the difference between the temperature detected by the temperature sensor 50 and the target cooling temperature (second temperature difference). That is, the controller 45 determines the difference between the target cooling temperature and the heat storage medium M (first temperature difference) and the difference between the target cooling temperature and the heat medium in the second heat exchanger 24 (second temperature difference). The first temperature difference is compared with the second temperature difference by the controller 45, and either one of the heat storage medium M and the second heat exchanger 24 with a smaller temperature difference from the target cooling temperature is used for the cooling operation. The temperature detected by the temperature sensor 46, instead of the temperature detected by the temperature sensor 50, may be regarded as the heat medium temperature in the second heat exchanger 24 and used to determine the second temperature difference.

When the first temperature difference between the target cooling temperature and the heat storage medium M is smaller than the second temperature difference between the target cooling temperature and the heat medium in the second heat exchanger 24, the cooling operation is performed using the heat storage unit 21 as shown in Fig. 4B. Conversely, when the second temperature difference is smaller than the first temperature difference, the cooling operation is performed not using the heat storage unit 21 but using the second heat exchanger 24 as shown in Fig. 6A.

Further alternatively, the cooling operation may be switched based on the temperature relation between the heat storage unit 21 and the second heat exchanger 24. In this case, it is determined by the controller 45 whether or not there is a temperature difference between the heat storage medium M detected by the temperature sensor 52 and the temperature sensor 50. The temperature difference between the heat storage medium M and the temperature sensor 50 may be substituted for the temperature difference between the heat storage medium M and the temperature sensor 46. When there is a temperature difference between the heat storage medium M and the temperature sensor 50, the cooling operation is performed using the heat storage unit 21 as shown in Fig. 4B, that is, the air conditioner 20 is operated in the first circulation condition. When the temperature of the heat storage medium M reaches the temperature detected by the temperature sensor 50, the cooling operation is performed not using the heat storage unit 21 but using the second heat exchanger 24 as shown in Fig. 6A, that is, the air conditioner 20 is operated in the second circulation condition.

In the air conditioner 20, also the heating operation may be switched between the heating using the heat storage unit 21 and the heating without using the heat storage unit 21. For example, when the temperature detected by the temperature sensor 52 indicates that no heat transfer from the heat storage medium M to the heat medium occurs due to the continuing heating operation using the heat storage unit 21 (see Fig. 5B), the heating operation using the heat storage unit 21 is switched by the controller 45 to the heating operation without using the heat storage unit 21 (see Fig. 6B). In this case, the temperature detected by the temperature sensor 52 and indicating that no heat transfer from the heat storage medium M to the heat medium occurs corresponds to the temperature threshold for switching the heating operation. For example, the melting point of the heat storage medium M plus or minus 10 degrees C may be used for such temperature threshold, whereby it may be determined that the stored heat in the heat storage medium M by phase change is exhausted.

Alternatively, the heating operation may be switched based on the temperature in the second heat exchanger 24. In this case, the controller 45 determines the difference between the temperature of the heat storage medium M detected by the temperature sensor 52 and the target heating temperature (first temperature difference) and the difference between the temperature detected by the temperature sensor 50 and the target heating temperature (second temperature difference). The first temperature difference is compared with the second temperature difference by the controller 45, and either one of the heat storage medium M and the second heat exchanger 24 with a smaller temperature difference from the target heating temperature is used for the heating operation. The temperature detected by the temperature sensor 46, instead of the temperature detected by the temperature sensor 50, may be used to determine the second temperature difference. When the first temperature difference between the target heating temperature and the heat storage medium M is smaller than the second temperature difference between the target heating temperature and the heat medium in the second heat exchanger 24, the heating operation is performed using the heat storage unit 21 as shown in Fig. 5B. Conversely, when the second temperature difference is smaller than the first temperature difference, the heating operation is performed not using the heat storage unit 21 but using the second heat exchanger 24 as shown in Fig. 6B.

Further alternatively, the heating operation may be switched based on the temperature relation between the heat storage unit 21 and the second heat exchanger 24. In this case, it is determined by the controller 45 whether or not there is a temperature difference between the heat storage medium M detected by the temperature sensor 52 and the temperature sensor 50. When there is a temperature difference between the heat storage medium M and the temperature sensor 50, the heating operation is performed using the heat storage unit 21 as shown in Fig. 5B, that is, the air conditioner 20 is operated in the first circulation condition. When the temperature of the heat storage medium M reaches the temperature detected by the temperature sensor 50, the heating operation is performed not using the heat storage unit 21 but using the second heat exchanger 24 as shown in Fig. 6B, that is, the air conditioner 20 is operated in the second circulation condition.

In the air conditioning in the medium temperature environment described above, heat medium is circulated between the first heat exchange surface 27 of the peltier unit 22 and the second heat exchanger 24 for heat exchange between the heat medium and the outside air. For example, with no heat storage in the heat storage medium M, the heat medium may be flowed through both the first heat exchange surface 27 of the peltier unit 22 and the heat storage medium M (heat storage unit 21). In this case, when it is determined by the controller 45 that the outside air temperature detected by the temperature sensor 46 is within the middle temperature range, the air conditioner 20 is operated so as to prevent the heat storage operation. The temperature detected by the temperature sensor 50 or the temperature of the compartment 11 detected by the temperature sensor 47 may be used for the outside air temperature. Further, when the outside air temperature or the temperature of the compartment 11 is within the medium temperature range, the heat storage operation may be prevented selectively by manual operation of any switch by a driver or passenger of the vehicle.

For example, with no heat storage in the heat storage medium M, the peltier unit 22 is energized in one direction so that the compartment 11 is heated. In this case, heat is transferred from the first heat exchange surface 27 to the second heat exchange surface 28, so that heat is removed from the heat medium flowing through the first heat medium circuit 29 by heat exchange with the first heat exchange surface 27. The heat medium from which heat has been removed is flowed through the heat storage medium M where heat is exchanged between the heat medium and the heat storage medium M, so that the temperature of the heat storage medium M is decreased, resulting in cold storage in the heat storage medium M. The amount of cold storage is increased by circulation of heat medium between the heat storage medium M and the first heat exchange surface 27. The stored cold in the heat storage medium M can be used for the cooling operation when the temperature of the compartment 11 is increased and the heating operation needs to be switched to the cooling operation. Such usage of the air conditioner 20 allows the cooling operation in the daytime without using electric power only for the heat storage after the heating operation in the morning in the middle temperature environment such as in spring and autumn, resulting in efficient use of heat.

On the other hand, with no heat storage in the heat storage medium M, the peltier unit 22 is energized in the other direction so that the compartment 11 is cooled. In this case, heat is transferred from the second heat exchange surface 28 to the first heat exchange surface 27 and further to the heat medium flowing through the first heat medium circuit 29. The heat that the heat medium receives from the first heat exchange surface 27 can be stored in the heat storage medium M by heat exchange between the heat medium and the heat storage medium M. The stored heat in the heat storage medium M can be used when the compartment 11 needs to be heated.

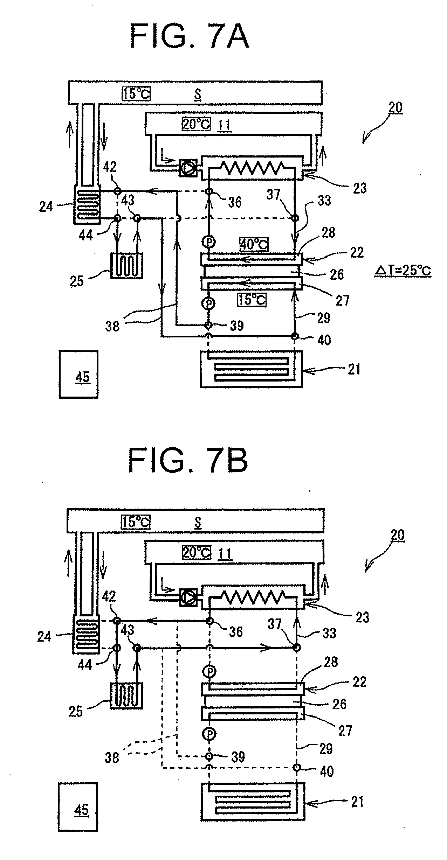

Fig. 7A is similar to Fig. 4A, but showing the heating operation using waste heat of the system. When the temperature of the heat medium flowing through the fifth heat medium circuit in the third heat exchanger 25 detected by the temperature sensor 51 is higher than the temperature of the heat storage medium M, the heating operation is performed using the waste heat as shown in Fig. 7A, that is, the air conditioner 20 is operated in the third circulation condition. The operation of Fig. 7A differs from the operation of Fig. 6B in that the switching valves 42, 43, 44 are operated so that the third heat exchanger 25 is located downstream of the second heat exchanger 24 as viewed in the flowing direction of the heat medium. Such heating operation in the third circulation condition allows use of the heat from the outside air as well as use of the waste heat as a heat source. When the temperature of the heat storage medium M is higher than the temperature in the third heat exchanger 25, the heating operation is performed using the heat storage medium M in the first circulation condition. In the cooling operation, the positions of the switching valves 42, 43, 44 are kept as shown in Fig. 7A, and the peltier unit 22 is energized in the other direction. The pump 30 is operated in reverse direction so that heat medium is flowed through the first heat exchange surface 27 of the peltier unit 22 in reverse direction. In this case, the heat that the heat medium receives from the first heat exchange surface 27 is discharged through the third heat exchanger 25 and the second heat exchanger 24.

When the peltier unit 22 needs not to be used for heating the heat medium because of large amount of heat from the third heat exchanger 25, the switching valves 36, 37, 39, 40, 42, 43, 44 are operated so that heat is directly supplied from the third heat exchanger 25 to the first heat exchanger 23, as shown in Fig. 7B. In this case, the pumps 30, 34 are not operated, but the pump (not shown) of the third heat exchanger 25 is operated. When the amount of waste heat is sufficient, the heating of the compartment 11 can be performed only by circulation of the heat medium between the first and third heat exchangers 25, 23 without energizing the peltier unit 22.

When there is an extra amount of waste heat in low temperature environment, the switching valves 36, 37, 39, 40, 42, 43, 44 are operated so that heat medium is circulated between the third heat exchanger 25 and the heat storage unit 21 and the waste heat is used for heat storage in the heat storage medium M. When the amount of stored heat in the heat storage medium M reaches the limit, the heat medium is flowed from the third heat exchanger 25 to the first heat exchange surface 27 of the peltier unit 22 where heat is removed from the heat medium for air conditioning as shown in Fig. 7A, and any remaining heat is discharged through the second heat exchanger 24. When the waste heat temperature is higher than the temperature of the heat storage medium M and the amount of waste heat is balanced with the amount of heat required for air conditioning using the peltier unit 22, the air conditioner 20 is operated by the controller 45 so that the heat medium flowing through the third heat exchanger 25 is flowed only through the first heat exchange surface 27 of the peltier unit 22.

When the outside air temperature or the temperature of the compartment 11 is not within the middle temperature range, the air conditioner 20 may be operated by the controller 45 under the heat storage mode so that heat medium is circulated between the second heat exchanger 24 and the heat storage unit 21. In this case, the heat medium after heat exchange with the outside air is flowed through the heat storage unit 21, resulting in heat or cold storage in the heat storage medium M.

The air conditioner 20 according to the first embodiment offers the following advantages.
(1) Depending on the polarity of the voltage applied to the peltier unit 22, heat is transferred from the second heat exchanger 24 to the heat storage unit 21 for heat storage in the heat storage unit 21, or from the heat storage unit 21 to the first heat exchanger 23 for air conditioning of the compartment 11. Thus, there is no need to provide any circuit for reversing the flow of heat medium, so that the heat transfer path is simplified.
(2) The provision of the first heat medium circuit 29, the second heat medium circuit 33, the third heat medium circuit and the fourth heat medium circuit allows heat transfer between the peltier unit 22 and the heat storage unit 21, the first heat exchanger 23 and the second heat exchanger 24 provided apart from the peltier unit 22. The provision of the fourth heat medium circuit also allows heat transfer between the first and second heat exchangers 23, 24.
(3) In the air conditioning, the heat transfer between the first heat exchanger 23 and the heat storage unit 21 through the peltier unit 22 can be switched by the controller 45 to the heat transfer between the first and second heat exchangers 23, 24 through the peltier unit 22, and vice versa. This allows either the heat storage unit 21 or the second heat exchanger 24 to be selected so that a higher COP of the air conditioner 20 is achieved in the air conditioning.
(4) The heat transfer between the heat storage unit 21 and the first heat exchanger 23 can be switched to the heat transfer between the first and second heat exchanges 23, 24, and vice versa, based on the temperature of the heat storage medium M as the temperature threshold.
(5) The temperature difference between the target compartment temperature and the heat storage unit 21 and the temperature difference between the target compartment temperature and the second heat exchanger 24 are determined by the controller 45. Either one of the heat storage unit 21 and the second heat exchanger 24 with a smaller temperature difference from the target compartment temperature is selected by the controller 45 for air conditioning, resulting in a higher COP of the air conditioner 20 in the air conditioning.
(6) When the outside air temperature or the temperature of the compartment 11 is within the middle temperature range, heat is transferred between the first and second heat exchangers 23, 24 through the peltier unit 22. Thus, there is no need to control the air conditioner 20 so that heat is transferred between the first and second heat exchangers 23, 24 when the stored heat in the heat storage unit 21 is exhausted, thereby simplifying the control of the air conditioner 20.
(7) The third heat exchanger 25 is provided for heat exchange with waste heat. When the heat medium temperature in the third heat exchanger 25 is higher than the temperature of the heat storage medium M, heat is transferred between the first and third heat exchangers 23, 25 through the peltier unit 22 so that the compartment 11 is heated using the waste heat.
(8) With no heat storage in the heat storage unit 21, when heat is transferred between the heat storage unit 21 and the first heat exchanger 23 through the peltier unit 22 for air conditioning, the heat generated by the peltier unit 22 can be stored in the heat storage medium M without being wasted, or cold storage in the heat storage medium M can be performed by heat transfer from the heat storage medium M to the peltier unit 22. The stored heat or cold in the heat storage medium M can be used for air conditioning of the compartment 11. For example, in the temperature environment such as in spring and autumn it is cold in the morning and hot in the daytime, the cooling can be performed in the daytime using the cold stored in the heat storage medium M during the heating in the morning, which results in efficient use of heat.
(9) Since the heat storage medium M is made of a material having a melting point within the range of 5 to 30 degrees C, the phase of the heat storage medium M is changed from solid to liquid or liquid to solid in such temperature range. This allows use of the latent heat of the heat storage medium M, resulting in more efficient heat utilization as compared to the case of a sensible heat storage material. Further, since the common heat storage medium M can be used for latent heat storage in high temperature environment and low temperature environment, it is not necessary to change the kind of the heat storage medium depending on the temperature environment such as summer and winter. Further, heat storage is always performed within the latent heat range, resulting in high density heat storage, as compared to the case of a sensible heat storage medium.
(10) In the air conditioning, the peltier unit 22 is energized so that the temperature difference between the first and second heat exchange surfaces 27, 28 (ΔT) is within the range of about 10 to 25 degrees C. Although this temperature difference is smaller than that in a heat pump which is over 30 degrees C, the amount of electric power for air conditioning is less because of such small temperature difference, which is preferable for the electric vehicle 10 in which the electric power available is limited. Further, since the temperature difference between the heat storage medium M and the outside air temperature is less, the thickness of the insulating material for the heat storage unit 21 can be reduced, resulting in the reduction of the size of the container for the heat storage unit 21.

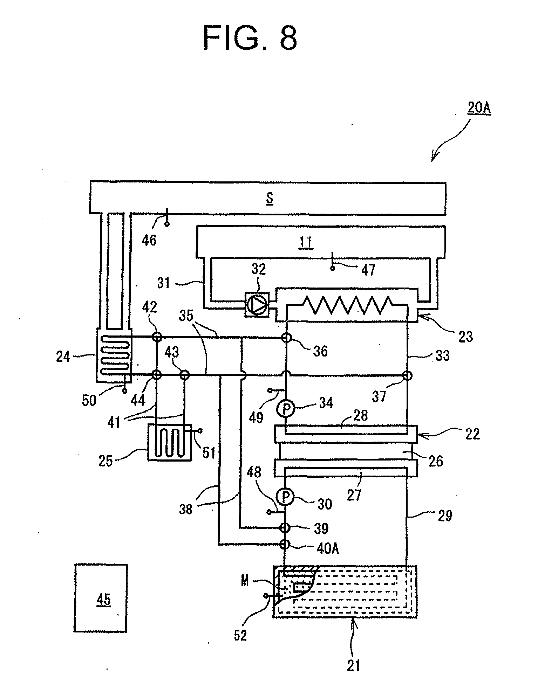

Fig. 8 shows an air conditioner as a modification of the first embodiment. In the air conditioner 20A, the passage 38 is connected to the first heat medium circuit 29 through the switching valves 39, 40A at a position between the pump 30 and the heat storage unit 21. The switching valve 39 is located on the side of the pump 30, and the switching valve 40A is located on the side of the heat storage unit 21. The air conditioner 20A differs from the air conditioner 20 of the first embodiment only in the location of the switching valves 40, 40A. In the air conditioner 20A, the heat medium circulating between the first heat exchange surface 27 of the peltier unit 22 and the second heat exchanger 24 always flows through the heat storage unit 21. This allows air conditioning using the second heat exchanger 24 as well as the heat or cold storage in the heat storage medium M.

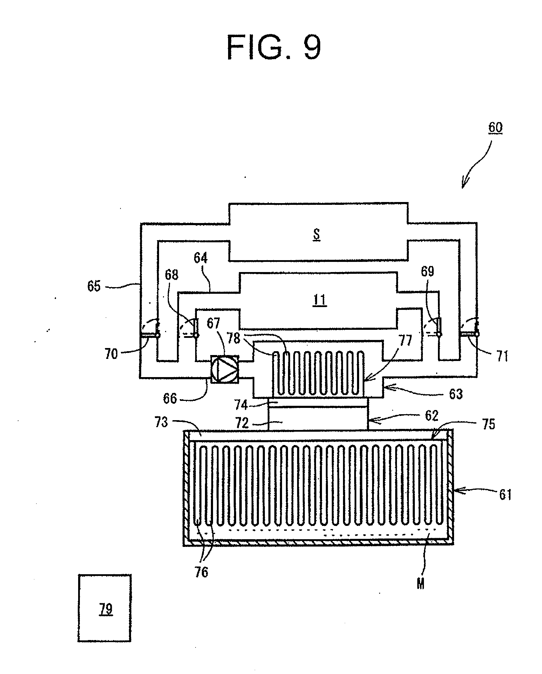

Fig. 9 shows the second embodiment of the air conditioner. The second embodiment differs from the first embodiment in that the heat storage medium and the first heat exchanger are in physical contact with the peltier unit for thermal coupling.

The air conditioner 60 includes a heat storage unit 61, a peltier unit 62, a first heat exchanger 63, a circulation passage 64 for connection between the compartment 11 and the first heat exchange 63, and a circulation passage 65 for connection between the outside S and the first heat exchanger 63. The circulation passages 63, 64 are connected to a passage 66 provided with a fan 67. The circulation passage 64 is provided with dampers 68, 69, and the circulation passage 65 is provided with dampers 70, 71. The dampers 68, 69, 70, 71 and the fan 67 are operated so that al least one of the air in the compartment 11 and the outside air is introduced in the first heat exchanger 63.

The peltier unit 62 includes a unit body 72 having a number of peltier devices, a first heat exchange surface 73 formed over one end surfaces of the peltier devices, a second heat exchange surface 74 formed over the other end surfaces of the peltier devices. When electric current flows through the peltier devices in one direction, the first heat exchange surface 73 serves as a heat absorbing surface and the second heat exchange surface 74 as a heat radiating surface. When electric current flows through the peltier devices in the other direction, the first heat exchange surface 73 serves as a heat radiating surface and the second heat exchange surface 74 as a heat absorbing surface. In the present embodiment, the area of the first heat exchange surface 73 is larger than that of the second heat exchange surface 74 for efficient heat transfer to the heat storage unit 61.

The first heat exchange surface 73 has a fin unit 75 mounted thereto and having parallelly arranged plural fins 76, and similarly the second heat exchange surface 74 has a fin unit 77 mounted thereto and having parallelly arranged plural fins 78, resulting in an increased area of the heat exchange surface for efficient heat transfer.

The heat storage medium M is received in the container of the heat storage unit 61 and in contact with the fin unit 75 so that heat is exchanged the first heat exchange surface 73 of the peltier unit 62 and the heat storage medium M through the fin unit 75. The fin unit 77 is provided in the first heat exchanger 63, allowing heat exchange between the second heat exchange surface 74 of the peltier unit 74 and at least one of the air in the compartment 11 and the outside air through the fin unit 77. The operation of the air conditioner 60 is controlled by the controller 79 to which the temperature sensors (not shown) at various positions in the air conditioner 60 are connected.

In cold storage operation in high temperature environment, the peltier unit 62 is energized in one direction under the control of the controller 79 so that the first heat exchange surface 73 serves as the heat absorbing surface and the second heat exchange surface 74 serves as the heat radiating surface. The dampers 68, 69, 70, 71 and the fan 67 are operated by the controller 79 so that the outside air is introduced in the first heat exchanger 63 and then discharged into the outside S. Heat is transferred from the heat storage medium M through the fin unit 75 to the first heat exchange surface 73. The heat is then transferred from the second heat exchange surface 74 through the fin unit 77 to the outside air in the first heat exchanger 63. In this way, cold storage in the heat storage medium M is performed by heat transfer from the heat storage unit 61 to the outside air.

In cooling operation in high temperature environment, the peltier unit 62 is energized in the other direction under the control of the controller 79 so that the first heat exchange surface 73 serves as the heat radiating surface and the second heat exchange surface 74 serves as the heat absorbing surface. The dampers 68, 69, 70, 71 and the fan 67 are operated by the controller 79 so that the air in the compartment 11 is circulated between the first heat exchanger 63 and the compartment 11. Heat is transferred from the air in the compartment 11 through the fin unit 77 to the second heat exchange surface 74 in the first heat exchanger 63. The heat is then transferred from the first heat exchange surface 73 through the fin unit 75 to the heat storage medium M. In this way, cooling of the compartment 11 is performed by heat transfer from the air in the compartment 11 to the heat storage unit 61.

In heat storage operation in low temperature environment, the peltier unit 62 is energized in the other direction under the control of the controller 79 so that the first heat exchange surface 73 serves as the heat radiating surface and the second heat exchange surface 74 serves as the heat absorbing surface. The dampers 68, 69, 70, 71 and the fan 67 are operated by the controller 79 so that the outside air is introduced in the first heat exchanger 63 and then discharged into the outside S. Heat is transferred from the outside air through the fin unit 77 to the first heat exchange surface 74 in the first heat exchanger 63. The heat is then transferred from the first heat exchange surface 73 through the fin unit 75 to the heat storage medium M. In this way, heat storage in the heat storage medium M is performed by heat transfer from the outside air to the heat storage unit 61.

In heating operation in low temperature environment, the peltier unit 62 is energized in one direction under the control of the controller 79 so that the first heat exchange surface 73 serves as the heat absorbing surface and the second heat exchange surface 74 serves as the heat radiating surface. The dampers 68, 69, 70, 71 and the fan 67 are operated by the controller 79 so that the air in the compartment 11 is circulated between the first heat exchanger 63 and the compartment 11. Heat is transferred from the heat storage medium M through the fin unit 75 to the first heat exchange surface 73. The heat is then transferred from the second heat exchange surface 74 through the fin unit 77 to the air in the compartment 11 in the first heat exchanger 63. In this way, heating of the compartment 11 is performed by heat transfer from the heat storage unit 61 to the air in the compartment 11.

The second embodiment allows heat and cold storage in the heat storage medium M and air conditioning of the compartment 11 using the heat storage unit 61 without providing any heat medium passage or circuit. Thus, it is not necessary to provide piping, pumps and valves for heat medium circulation, resulting in a simple structure of the air conditioner 60. Further, the provision of the fin units 75, 77 for heat exchange allows the peltier unit 62 to be located close to the heat storage unit 61 and the first heat exchanger 63, resulting in reduced size of the air conditioner 60 and efficient heat exchange.

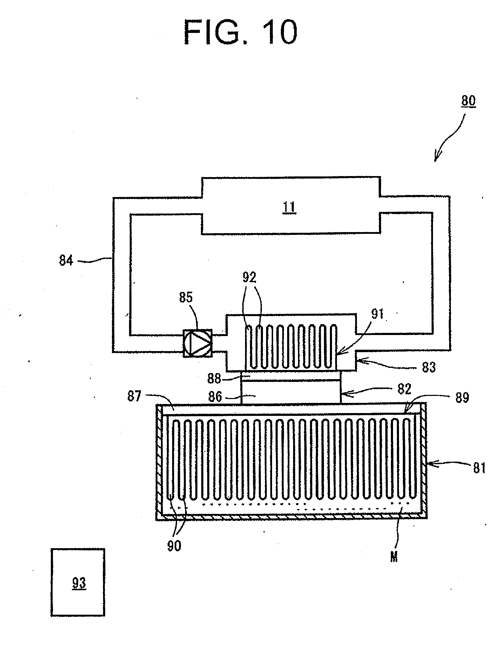

Fig. 10 shows the third embodiment of the air conditioner. The third embodiment differs from the second embodiment in that the air in the compartment is used for heat storage. The air conditioner 80 includes a heat storage unit 81, a peltier unit 82, a first heat exchanger 83, and a circulation passage 84 for connection between the compartment 11 and the first heat exchanger 83.

The circulation passage 84 is provided with a fan 85 by which the air in the compartment 11 is introduced in the first heat exchanger 83. Although not shown in the drawing, there is provided a circulator including an air passage and fan by which the outside air is introduced in the compartment 11 and then discharged into the outside. The fan 85 and the circulator are operated so that the outside air is introduced in the compartment 11 and further to the first heat exchanger 83.

The peltier unit 82 includes a unit body 86 having a number of peltier devices, a first heat exchange surface 87 formed over one end surfaces of the peltier devices, a second heat exchange surface 88 formed over the other end surfaces of the peltier devices. The first heat exchange surface 87 has a fin unit 89 mounted thereto and having parallelly arranged plural fins 90, and similarly the second heat exchange surface 88 has a fin unit 91 mounted thereto and having parallelly arranged plural fins 92.

The heat storage medium M is received in the container of the heat storage unit 81 and in contact with the fin unit 89. The fin unit 91 is provided in the first heat exchanger 83, The operation of the air conditioner 80 is controlled by the controller 93 to which the temperature sensors (not shown) at various positions in the air conditioner 80 are connected.

In cold storage operation in high temperature environment, the peltier unit 82 is energized in one direction under the control of the controller 93. With the outside air introduced in the compartment 11, the fan 85 is operated by the controller 93 so that the outside air is introduced in the first heat exchanger 83. Heat is transferred from the heat storage medium M through the fin unit 89 to the first heat exchange surface 87. The heat is then transferred from the second heat exchange surface 88 through the fin unit 91 to the outside air in the first heat exchanger 83. In this way, cold storage in the heat storage medium M is performed by heat transfer from the heat storage unit 81 to the outside air.

In cooling operation in high temperature environment, the peltier unit 82 is energized in the other direction under the control of the controller 93. With the outside air prevented from entering in the compartment 11, the fan 85 is operated by the controller 79 so that the air in the compartment 11 is introduced in the first heat exchanger 83. Heat is transferred from the air in the compartment 11 through the fin unit 91 to the second heat exchange surface 88 in the first heat exchanger 83. The heat is then transferred from the first heat exchange surface 87 through the fin unit 89 to the heat storage medium M. In this way, cooling of the compartment 11 is performed by heat transfer from the air in the compartment 11 to the heat storage unit 81.

In heat storage operation in low temperature environment, the peltier unit 82 is energized in the other direction under the control of the controller 93. With the outside air introduced in the compartment 11, the fan 85 is operated by the controller 93 so that the outside air is introduced in the first heat exchanger 83. Heat is transferred from the outside air through the fin unit 91 to the second heat exchange surface 88 in the first heat exchanger 83. The heat is then transferred from the first heat exchange surface 87 through the fin unit 89 to the heat storage medium M. In this way, heat storage in the heat storage medium M is performed by heat transfer from the outside air to the heat storage unit 81.

In heating operation in low temperature environment, the peltier unit 82 is energized in one direction under the control of the controller 93. The fan 85 is operated by the controller 79 so that the air in the compartment 11 is introduced in the first heat exchanger 83. Heat is transferred from the heat storage medium M through the fin unit 89 to the first heat exchange surface 87. The heat is then transferred from the second heat exchange surface 88 through the fin unit 91 to the air in the compartment 11 in the first heat exchanger 83. ln this way, heating of the compartment 11 is performed by heat transfer from the heat storage unit 81 to the air in the compartment 11.

The third embodiment offers the advantages similar to those of the second embodiment

The above embodiments may be modified in various ways as exemplified below.

Although in the previous embodiments the present invention is applied to an electric vehicle, it is applicable to an airplane, ship, or automobile such as a hybrid electric vehicle (HEV), plug-in hybrid electric vehicle (PHEV) or engine-powered car having an internal combustion engine, and also applicable to a house and building.

Although in the first embodiment the peltier unit and the heat storage unit are provided in the motor room, they may be provided in any position as long as they are thermally insulated from the compartment. For example, the peltier unit and the heat storage unit may be provided in an underfloor space or closed cargo space.

In the second and third embodiments, heat transfer between the heat storage unit and the first heat exchanger is accomplished by heat exchange between the heat storage unit and the first heat exchange surface of the peltier unit through the fin unit and also between the second heat exchange surface and the air through the fin unit. In this case, heat transfer between the first heat exchanger and the heat storage unit can be accomplished not only by such fin unit but also by heat medium circulation between the first heat exchange surface and the heat storage unit through a circuit and pump, which allows precisely controlled air conditioning. Further, heat transfer between the second heat exchange surface and the air can be accomplished by the fin unit and such heat medium circulation.

Although in the first embodiment the first heat exchanger is provided separately from the second heat exchanger, the first heat exchanger may also serves as the second heat exchanger so that the outside air is introduced in the first heat exchanger. In this case, the outside air introduced in the first heat exchanger is used as a heat source, and heat is discharged through the first heat exchanger into the outside in the heat storage operation. Further, the first heat exchanger also serves as the third heat exchanger so that waste heat is transferred to the first heat exchanger through a heat medium circuit and pump, which allows heating of the compartment 11 using waste heat of the system.

Although in the previous embodiments potassium fluoride tetrahydrate (KF-4H₂0) is used for the latent heat storage material of the heat storage medium, the heat storage medium may be made of a latent heat storage material having a melting point within the medium temperature range, for example, an inorganic hydrate such as lithium perchlorate trihydrate (LiCl0₄ 3H₂0), or paraffinic material or clathrate material other than an inorganic hydrate.

Although in the previous embodiments a single heat storage unit is used, two or more heat storage units may be used so that the first heat exchanger is selectively connected to the respective heat storage units through the peltier unit. Provision of the heat storage unit with the heat storage medium in liquid phase and the heat storage unit with the heat storage medium in solid phase allows air conditioning by using either one of the heat storage media in temperature environment such as in spring and autumn in which cooling and/or heating may be performed Although the conventional system having two heat storage media for low and high temperatures requires a large amount of electric power for heat storage, use of the heat storage medium having a melting point within the range of 5 to 30 degrees C allows heat storage in the respective heat storage media in liquid and solid phase using less electric power.

An air conditioner includes a heat storage unit having a heat storage medium, a first heat exchanger for heat exchange with air in a compartment, a second heat exchanger for heat exchange with outside air, and a peltier unit having a first and second heat exchange surfaces opposite to each other. The first heat exchange surface is thermally conductive to the heat storage unit, and the second heat exchange surface is thermally conductive to the first and second heat exchangers. In heat storage mode electric current flows through the peltier unit in one direction to provide heat transfer between the second heat exchanger and the heat storage unit. In air conditioning mode electric current flows through the peltier unit in the other direction to provide heat transfer between the first heat exchanger and the heat storage unit.

## Claims

1. An air conditioner, comprising:
a heat storage unit (21) having a heat storage medium (M);
a first heat exchanger (23) for heat exchange with air in a compartment (11); and
a second heat exchanger (24) for heat exchange with outside air,
the air conditioner **characterized by**
a peltier unit (22) having a peltier device, the peltier unit (22) having a first heat exchange surface (27) and a second heat exchange surface (28) opposite to each other, the first heat exchange surface (27) being thermally conductive to the heat storage unit (21), the second heat exchange surface (28) being thermally conductive to the first and second heat exchangers (23, 24);
wherein in heat storage mode electric current flows through the peltier unit (22) in one direction to provide heat transfer between the second heat exchanger (24) and the heat storage unit (21) for heat storage in the heat storage medium (M), and in air conditioning mode electric current flows through the peltier unit (22) in the other direction to provide heat transfer between the first heat exchanger (23) and the heat storage unit (21) for air conditioning of the compartment (11).

2. The air conditioner according to claim 1, further comprising:
a first heat medium circuit (29) where heat medium is circulated between the heat storage unit (21) and the first heat exchange surface (27) of the peltier unit (22);
a second heat medium circuit (33) where heat medium is circulated between the first heat exchanger (23) and the second heat exchange surface (28) of the peltier unit (22); and
a third heat medium circuit where heat medium is circulated between the second heat exchanger (24) and the second heat exchange surface (28) of the peltier unit (22).

3. The air conditioner according to claim 2, further comprising a fourth heat medium circuit where heat medium is circulated between the second heat exchanger (24) and the first heat exchange surface (27) of the peltier unit (22).

4. The air conditioner according to claim 3, further comprising:
a switching device (36, 37, 39, 40) for switching between the heat medium circuits; and
a controller (45) for controlling the switching device (36, 37, 39, 40),
wherein in the air conditioning mode the switching device (36, 37, 39, 40) is controlled by the controller (45) so that the air conditioner is operated in a first circulation condition in which heat medium is circulated through the first heat medium circuit (29), or operated in a second circulation condition in which heat medium is circulated through the fourth heat medium circuit.

5. The air conditioner according to claim 4, further comprising:
a first temperature sensor (52) for detecting the temperature of the heat storage medium (M); and
a second temperature sensor (50) for detecting the temperature of the second heat exchanger (24),
wherein in the air conditioning mode the switching device (36, 37, 39, 40) is controlled by the controller (45) so that the air conditioner is operated in the first circulation condition when there is a temperature difference between the temperatures of the heat storage medium (M) and the second heat exchanger (24), and operated in the second circulation condition when there is no temperature difference between the temperatures of the heat storage medium (M) and the second heat exchanger (24).

6. The air conditioner according to claim 4, further comprising:
a first temperature sensor (52) for detecting the temperature of the heat storage medium (M); and
a second temperature sensor (50) for detecting the temperature of the second heat exchanger (24),
wherein in the air conditioning mode the switching device (36, 37, 39, 40) is controlled by the controller (45) so that the air conditioner is operated in the first circulation condition when a first temperature difference between the temperature of the heat storage medium (M) and a target compartment temperature is smaller than a second temperature difference between the temperature of the second heat exchanger (24) and the target compartment temperature, and operated in the second circulation condition when the second temperature difference is smaller than the first temperature difference.

7. The air conditioner according to claim 5, further comprising a third temperature sensor (46, 47) for detecting compartment temperature or outside air temperature,
wherein in the air conditioning mode the switching device (36, 37, 39, 40) is controlled by the controller (45) so that the air conditioner is operated in the second circulation condition when the compartment temperature or the outside air temperature is within the range of 10 to 30 degrees Celsius, or 10 degrees Celsius above or below the melting point of the heat storage medium (M).

8. The air conditioner according to claim 7, further comprising a third heat exchanger (25) for heat exchange with waste heat, the third heat exchanger (25) being thermally conductive to the first heat exchange surface (27) of the peltier unit (22).

9. The air conditioner according to claim 8, further comprising a fifth heat medium circuit where heat medium is circulated between the third heat exchanger (25) and the first heat exchange surface (27) of the peltier unit (22).

10. The air conditioner according to claim 9, wherein in the air conditioning mode the switching device (36, 37, 39, 40, 42, 43, 44) is controlled by the controller (45) so that the air conditioner is operated in the first circulation condition or in a third circulation condition in which heat medium is circulated through the fifth heat medium circuit.

11. The air conditioner according to claim 10, further comprising a fourth temperature sensor (51) for detecting the temperature of the third heat exchanger (25),
wherein in the air conditioning mode the switching device (36, 37, 39, 40, 42, 43, 44) is controlled by the controller (45) so that the air conditioner is operated in the first circulation condition when the temperature of the heat storage medium (M) is higher than the temperature of the third heat exchanger (25), and operated in the third circulation condition when the temperature of the third heat exchanger (25) is higher than the temperature of the heat storage medium (M).

12. The air conditioner according to claim 7, wherein in the heat storage mode the air conditioner is operated so that heat transfer between the second heat exchanger (24) and the heat storage unit (21) is provided only when the compartment temperature or the outside air temperature is not within the range of 10 to 30 degrees Celsius, or 10 degrees Celsius above or below the melting point of the heat storage medium (M).

13. An air conditioner, comprising:
a heat storage unit (61) having a heat storage medium (M); and
a heat exchanger (63) for heat exchange with air in a compartment (11) or outside air,
the air conditioner **characterized by**
a peltier unit (62) having a peltier device, the peltier unit having a first heat exchange surface (73) and a second heat exchange surface (74) opposite to each other, the first heat exchange surface (73) being thermally conductive to the heat storage unit (61), the second heat exchange surface (74) being thermally conductive to the heat exchanger (63);
wherein in heat storage mode electric current flows through the peltier unit (62) in one direction to provide heat transfer between the outside air and the heat storage unit (61) through the heat exchanger (63) for heat storage in the
heat storage medium (M), and in air conditioning mode electric current flows through the peltier unit (62) in the other direction to provide heat transfer between the air in the compartment (11) and the heat storage unit (61) through the heat exchanger (63) for air conditioning of the compartment.

14. The air conditioner according to any one of claims 1 through 13, wherein the heat storage medium (M) has a melting point within the range of 5 to 30 degrees Celsius.

15. The air conditioner according to claim 14, wherein potassium fluoride tetrahydrate is used for the material of the heat storage medium (M).
